# DEMANDE DE BREVET EUROPEEN

(11) **EP 4 845 161 A1**
(43) Date de publication de la demande: **25.11.2026**
(21) Numéro de dépôt: 26178605.7
(22) Date de dépôt: 13.05.2026
(51) Int. Cl.: H04N 21/436

(54) **MODULATION DE L'ACTIVITÉ RÉSEAU POUR OPTIMISER LA RESTITUTION D'UN FLUX MÉDIA**

(30) Priorité: 19.05.2025 FR 2505333
(71) Demandeur: SAGEMCOM BROADBAND SAS, 92270 Bois-Colombes (FR)
(72) Inventeur: PARISOT, Clément, 92270 Bois-Colombes (FR); JARDIN, Arthur, 92270 Bois-Colombes (FR)
(74) Mandataire: Cabinet Boettcher

(57) **Abrégé**

Dispositif de communication (25) comportant :
- une interface de communication radio (27) comprenant un premier module (30) utilisant un canal de communication au sein d'un premier réseau sans-fil (32), et un deuxième module (31) utilisant ledit canal de communication au sein d'un deuxième réseau sans-fil (33) comprenant au moins un équipement de restitution (22) ;
- une unité de traitement (28) agencée pour déterminer, à un instant t, si le deuxième module (31) va transmettre dans un délai prédéterminé suivant l'instant t un flux média audit au moins un équipement de restitution (22) du deuxième réseau sans-fil (33) pour que ledit au moins un équipement de restitution restitue ledit flux média et, si c'est le cas, pour mettre en œuvre au moins une action limitative permettant de limiter une occupation du canal de communication par le premier module (30).

## Description

L'invention concerne le domaine des équipements utilisant une même interface de communication radio pour communiquer dans un premier réseau sans-fil et dans un deuxième réseau sans-fil, le deuxième réseau sans-fil comprenant un ou des équipements restituant un flux média transmis par ladite interface de communication radio.

### ARRIERE-PLAN DE L'INVENTION

Un boîtier décodeur, aussi appelé décodeur TV, décodeur audiovisuel ou STB pour *Set-Top Box,* est classiquement destiné à recevoir un flux audio-vidéo, à le décoder et à le traiter, à séparer le flux audio et le flux vidéo, à transmettre le flux vidéo à un téléviseur, et à transmettre le flux audio à un ou des dispositifs audio.

Le flux audio-vidéo peut être issu d'une source quelconque, qui est par exemple un réseau de diffusion (réseau de télévision par satellite, connexion Internet, réseau de télévision numérique terrestre (TNT), réseau de télévision par câble, etc.), un autre équipement connecté au boîtier décodeur (un lecteur de CD, de DVD ou de *BlueRay,* un smartphone, une tablette, etc.), ou bien encore un support de stockage (et par exemple une clef USB ou une carte mémoire connectée au boîtier décodeur).

Le ou les dispositifs audio peuvent comprendre le dispositif audio du téléviseur, une barre de son, des enceintes satellites, voire éventuellement, dans le cas d'un boîtier décodeur « avancé », un dispositif audio interne au boîtier décodeur.

Parmi les fonctionnalités mises en œuvre par un tel boîtier décodeur, on trouve donc notamment les fonctionnalités suivantes :
- connectivité internet sans-fil, en permettant la connexion à une passerelle domestique (*gateway*)*.* La passerelle est destinée à interconnecter un réseau local (LAN, pour *Local Area Network*) à un réseau étendu (WAN, pour *Wide Area Network*) *.* Le réseau local est par exemple un réseau Wi-Fi. Cette connectivité permet notamment au boîtier décodeur de recevoir des flux audio-vidéo de services de *streaming.* Pour assurer la rapidité de l'interface utilisateur et la haute qualité des flux vidéos, la connexion Wi-Fi doit permettre de très hauts débits. Le boîtier décodeur peut effectuer des scans de l'environnement radio régulièrement et sans intervention de l'utilisateur, par exemple pour optimiser la connexion Wi-Fi à la passerelle. Les scans permettent de détecter les réseaux environnants et donc de se connecter automatiquement au meilleur réseau disponible, par exemple dans le cadre de fonctions de *roaming.*
- restitution du flux audio, associé au flux audio-vidéo, sur des enceintes satellites sans-fil, de manière à restituer l'audio selon un format multicanal, souvent nommé *surround,* tel que le format 5.1. Afin d'assurer la synchronisation entre le flux vidéo et le flux audio, la transmission des données audio par le boîtier décodeur aux enceintes satellites, via une communication sans-fil, doit avoir une latence très faible.

Ces fonctionnalités doivent se perturber le moins possible tout en agissant simultanément.

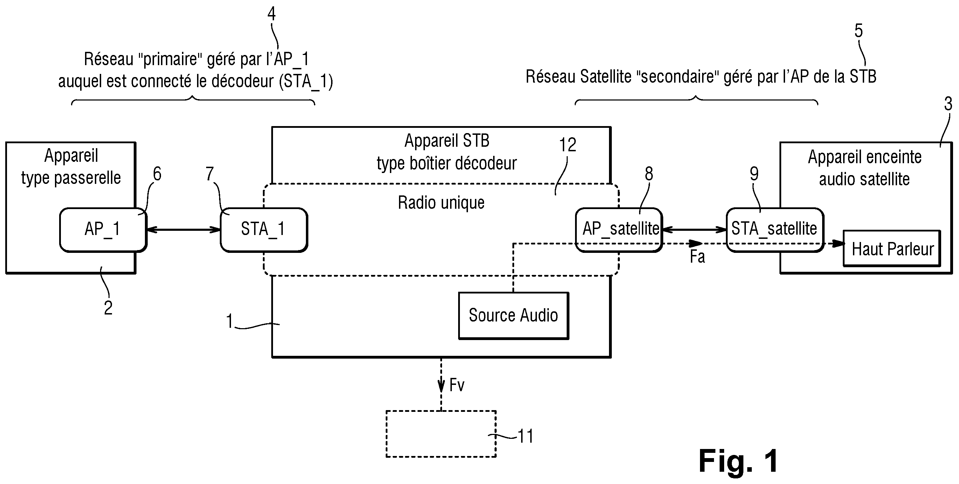

En référence à la figure 1, deux réseaux sans-fil sont donc mis en œuvre dans un système comprenant un boîtier décodeur 1, une passerelle 2 et une ou des enceintes satellites 3 : un réseau primaire 4 et un réseau secondaire 5.

La passerelle 2 comprend un point d'accès 6 dit « primaire » auquel est connectée la station 7 du boîtier décodeur 1, pour définir le réseau primaire 4. Le boîtier décodeur 1 est donc connecté au point d'accès primaire 6 de la passerelle 2, par exemple afin d'accéder à Internet. Le boîtier décodeur 1 comprend aussi un point d'accès 8 dit « secondaire » auquel sont connectées les stations 9 des enceintes satellites 3, de manière à définir le réseau secondaire 5. Le flux audio Fa provenant de la source audio 10 est transmis par le boîtier décodeur 1 aux enceintes satellites 3 via le réseau secondaire 5. Le flux vidéo Fv est transmis à un téléviseur 11.

On s'intéresse au cas où le boîtier décodeur 1 comprend une unique interface de communication radio 12 pour mettre en œuvre la station 7 et le point d'accès secondaire 8.

Certaines activités de la station 7, telles que le scan Wi-Fi ou la transmission (c'est-à-dire l'émission ou la réception) de données à très haut débit, utilisent la totalité des ressources de l'interface de communication radio 12, et donc peuvent perturber le point d'accès 8.

Ces perturbations se manifestent par des coupures dans le flux audio Fa restitué par les enceintes 3, ce qui nuit à l'expérience utilisateur.

On note que l'art antérieur pertinent est très limité, car il existe très peu de produits qui présentent les contraintes suivantes :
- une interface de communication radio unique 12 pour sa station 7 (Wi-Fi par exemple) et pour la connexion (Wi-Fi par exemple) avec les enceintes satellites 3 (ou d'autres équipements de restitution), l'activité de la station 7 étant particulièrement propice à perturber l'activité du point d'accès secondaire 8 et donc l'expérience utilisateur ;
- un besoin d'activité spontanée sur la station 7 (par exemple des scans pour la fonction de *roaming*) qui peuvent perturber la connexion avec les enceintes 3. Ce besoin d'activité spontanée ne répond pas à l'action d'un utilisateur, et il ne s'agit donc pas d'une réaction à un problème qui pourrait justifier et rendre acceptable une perturbation pour l'utilisateur.

Il existe plusieurs solutions mises en œuvre dans l'art antérieur pour minimiser les coupures audio d'enceintes satellites.

Une première solution est d'augmenter la fiabilité/robustesse de la chaîne de données. Ceci nécessite généralement d'augmenter la latence de la chaîne de données (ce qui permet d'avoir le temps nécessaire pour faire des retransmissions). Or, le système peut être contraint d'adhérer à une latence très faible pour assurer la synchronisation entre la vidéo et l'audio.

Une deuxième solution consiste à utiliser une chaîne radio dédiée aux enceintes satellites, ce qui peut se faire de plusieurs manières :
- ajout d'une chaîne radio dans le boîtier décodeur, ce qui nécessite d'augmenter excessivement la taille de l'équipement pour placer les antennes supplémentaires avec suffisamment de distance entre antennes pour éviter l'interférence, et d'augmenter la complexité du module logiciel Wi-Fi pour pouvoir gérer deux radios ;
- ajout d'un appareil émetteur sans-fil externe (tel que *soundsend* ou *enclave cinehome,* marques déposées), ce qui augmente excessivement le coût de fabrication du système, et augmente sa complexité. Un deuxième câble d'alimentation est par exemple nécessaire. Il faut aussi assurer la compatibilité entre le boîtier décodeur et l'appareil émetteur.

Une troisième solution consiste à utiliser la passerelle (voir par exemple le système *DTS Play-Fi,* marque déposée), qui nécessite justement que celle-ci soit disponible dans le réseau. Or, le système se veut autonome et donc doit aussi pouvoir fonctionner sans la présence de point d'accès Wi-Fi externe au boîtier décodeur (ce qui peut être le cas par exemple quand le boîtier décodeur est branché en Ethernet).

### OBJET

L'invention a pour objet, dans un équipement utilisant une même interface de communication radio pour communiquer dans un premier réseau sans-fil et dans un deuxième réseau sans-fil, le deuxième réseau sans-fil comprenant un ou des équipements restituant un flux média transmis par ladite interface de communication radio, d'améliorer la qualité et la fiabilité de la transmission du flux média et ce, sans présenter les inconvénients des trois solutions qui viennent d'être décrites.

### RESUME

En vue de la réalisation de ce but, on propose un dispositif de communication comportant :
- une interface de communication radio comprenant un premier module agencé pour utiliser un canal de communication au sein d'un premier réseau sans-fil, et un deuxième module agencé pour utiliser ledit canal de communication au sein d'un deuxième réseau sans-fil comprenant au moins un équipement de restitution ;
- une unité de traitement agencée pour déterminer, à un instant t, si le deuxième module va transmettre dans un délai prédéterminé suivant l'instant t un flux média audit au moins un équipement de restitution du deuxième réseau sans-fil via ledit canal de communication pour que ledit au moins un équipement de restitution restitue ledit flux média et, si c'est le cas, pour mettre en œuvre au moins une action limitative permettant de limiter une occupation dudit canal de communication par le premier module.

Ainsi, lorsque l'unité de traitement détecte que le deuxième module est sur le point de transmettre un flux média (par exemple un flux audio) aux équipements de restitution (par exemple des enceintes satellites), elle limite l'occupation par le premier module du canal de communication commun. La transmission du flux média ne subit donc plus de coupure et l'expérience utilisateur est nettement améliorée. Cette solution nécessite uniquement l'implémentation d'un module logiciel additionnel dans le dispositif de communication et est donc simple à mettre en œuvre et peu coûteuse. En particulier, elle ne nécessite pas d'augmenter la latence de la chaîne audio, ni d'ajouter une chaîne radio ou un appareil émetteur, ni d'utiliser la passerelle. Le dispositif de communication permet donc de surmonter les limitations de l'art antérieur.

On propose de plus un dispositif de communication tel que précédemment décrit, dans lequel le flux média est un flux audio.

On propose de plus un dispositif de communication tel que précédemment décrit, dans lequel ladite au moins une action limitative comprend une action consistant, suite à une réception d'une demande de scan émise par une entité d'un équipement intégrant le dispositif de communication, à déterminer si le scan associé à ladite demande de scan est ou non nécessaire à une connexion du premier module au premier réseau sans-fil, et à bloquer ou différer la mise en œuvre du scan uniquement si le scan n'est pas nécessaire à ladite connexion.

On propose de plus un dispositif de communication tel que précédemment décrit, dans lequel l'unité de traitement est agencée pour déterminer si le scan est nécessaire ou non en fonction d'un identifiant de ladite entité.

On propose de plus un dispositif de communication tel que précédemment décrit, dans lequel ladite au moins une action limitative comprend une action consistant à bloquer ou à différer la mise en œuvre d'au moins une fonction non nécessaire à une connexion du premier module au premier réseau sans-fil.

On propose de plus un dispositif de communication tel que précédemment décrit, dans lequel le délai prédéterminé a une durée supérieure ou égale à une durée de réalisation dudit scan ou de ladite au moins une fonction.

On propose de plus un dispositif de communication tel que précédemment décrit, dans lequel ladite au moins une action limitative comprend une action consistant à limiter un débit d'une communication mise en œuvre par le premier module.

On propose de plus un dispositif de communication tel que précédemment décrit, dans lequel le délai prédéterminé suivant l'instant t est une tranche de temps de durée prédéfinie, et dans lequel l'unité de traitement détecte que le deuxième module ne va pas transmettre de flux média audit au moins un équipement de restitution dans ladite tranche de temps suivant l'instant t lorsque le deuxième module n'a pas transmis de flux média audit au moins un équipement de restitution pendant un nombre prédéterminé de tranches de temps précédant l'instant t.

On propose de plus un dispositif de communication tel que précédemment décrit, dans lequel le premier module est une station Wi-Fi, et le deuxième module est un point d'accès Wi-Fi.

On propose de plus un boîtier décodeur intégrant un dispositif de communication tel que précédemment décrit.

On propose de plus un procédé de communication, mis en œuvre dans l'unité de traitement d'un dispositif de communication tel que précédemment décrit, et comprenant les étapes de déterminer, à un instant t, si le deuxième module va transmettre dans un délai prédéterminé suivant l'instant t un flux média audit au moins un équipement de restitution du deuxième réseau sans-fil via le canal de communication pour que ledit au moins un équipement de restitution restitue ledit flux média et, si c'est le cas, de mettre en œuvre au moins une action limitative permettant de limiter une occupation du canal de communication par le premier module.

On propose de plus un programme d'ordinateur comprenant des instructions qui conduisent le dispositif de communication tel que précédemment décrit à exécuter les étapes du procédé de communication tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en œuvre particuliers non limitatifs de l'invention.

### BREVE DESCRIPTION DES DESSINS

Il sera fait référence aux dessins annexés parmi lesquels :
[Fig. 1] la figure 1 représente une passerelle, un boîtier décodeur de l'art antérieur, un téléviseur et une enceinte satellite ;
[Fig. 2] la figure 2 représente une passerelle, un boîtier décodeur, un téléviseur et deux enceintes satellites ; [Fig. 3] la figure 3 illustre le procédé de communication selon un premier mode de réalisation ;
[Fig. 4] la figure 4 est un diagramme comprenant les étapes du procédé de filtrage des scans pour la station Wi-Fi ;
[Fig. 5] la figure 5 illustre le procédé de communication selon un deuxième mode de réalisation et un troisième mode de réalisation ;
[Fig. 6] la figure 6 est un diagramme comprenant les étapes du procédé de limitation du débit et du procédé de désactivation des fonctions facultatives.

### DESCRIPTION DETAILLEE

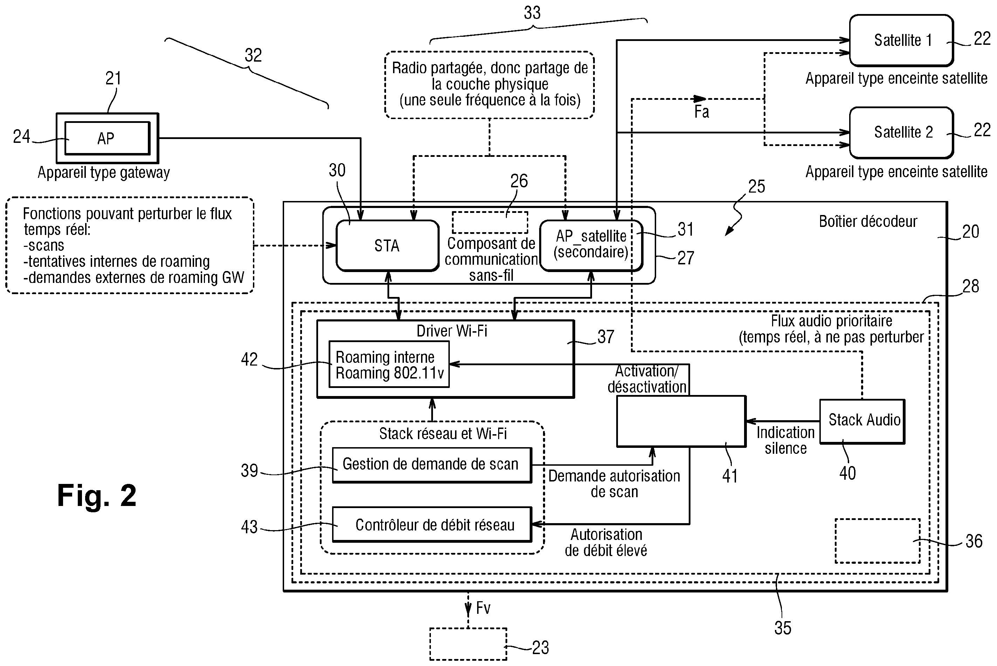

En référence à la figure 2, le boîtier décodeur 20 est relié à une passerelle domestique 21, à des enceintes satellites 22, et à un téléviseur 23.

Le boîtier décodeur 20 est notamment destiné à diffuser un flux audio-vidéo, et transmet pour cela le flux vidéo Fv au téléviseur 23 et le flux audio Fa aux enceintes 22. Afin d'assurer la synchronisation entre le son du flux audio Fa et les images du flux vidéo Fv, la chaîne de données audio vers les enceintes satellites 22 a une latence très faible (typiquement inférieure à 50ms).

La passerelle domestique 21 comprend un point d'accès primaire 24.

Le boîtier décodeur 20 comprend tout d'abord un dispositif de communication 25 comportant une unique interface de communication radio 27 et une unité de traitement 28.

L'interface de communication radio 27 est ici intégrée dans un unique composant de communication sans-fil. L'interface de communication radio 27 comprend ou est reliée à un unique jeu d'une ou plusieurs antennes 26. Par exemple, plusieurs antennes sont utilisées selon une technologie de type MIMO (*Multiple Input Multiple Output*)*.* L'unique jeu d'une ou plusieurs antennes 26 est dédié à la mise en œuvre de la couche physique de l'interface de communication radio 27. L'interface de communication radio 27 comprend un premier module 30, en l'occurrence une station, et un deuxième module 31, en l'occurrence un point d'accès secondaire. Le premier module 30 et le deuxième module 31 sont des modules matériels (*hardware*) et/ou logiciels (*software*)*.*

La station 30 utilise un canal de communication au sein d'un premier réseau sans-fil 32. Le premier réseau sans-fil 32 comprend la passerelle 21 et le boîtier décodeur 20. Le point d'accès primaire 24 de la passerelle 21 et la station 30 du boîtier décodeur 20 définissent donc un réseau primaire 32, qui est ici en l'occurrence un réseau Wi-Fi.

Le point d'accès secondaire 31 utilise le même canal de communication au sein d'un deuxième réseau sans-fil 33 comprenant le boîtier décodeur 20 et un ou des équipements de restitution, qui sont en l'occurrence les enceintes 22. Le point d'accès secondaire 31 du boîtier décodeur 20 et les enceintes 22 définissent donc un réseau secondaire 33, qui est aussi en l'occurrence un réseau Wi-Fi.

Le canal de communication utilise l'unique jeu d'antennes 26 précédemment évoqué.

Le boîtier décodeur 20 transmet un flux média aux enceintes 22 via le réseau secondaire 33. Le flux média est ici le flux audio Fa. Il s'agit par exemple d'un son multicanal à 360°.

Le boîtier décodeur 20 a donc une station Wi-Fi 30:
- qui partage l'interface de communication radio 27 avec le point d'accès secondaire 31 utilisé pour les enceintes satellites 22 ; et
- qui est connectée à la passerelle domestique Wi-Fi 21 ; et
- dont la connexion est utilisée pour l'accès à Internet.

L'unité de traitement 28 du dispositif de communication 25 est une unité logicielle et matérielle. L'unité de traitement 28 comprend au moins un composant de traitement 35, qui est par exemple un processeur « généraliste », un processeur spécialisé dans le traitement du signal (ou DSP, pour *Digital Signal Processor*)*,* un processeur spécialisé pour les algorithmes d'intelligence artificielle (de type NPU, pour *Neural Processing Unit*)*,* un microcontrôleur, ou bien un circuit logique programmable tel qu'un FPGA (pour *Field Programmable Gate Arrays*) ou un ASIC (pour *Application Specific Integrated Circuit) .*

L'unité de traitement 28 comprend aussi une ou des mémoires 36, reliées à ou intégrées dans le ou les composants de traitement 35. Au moins l'une de ces mémoires 36 forme un support d'enregistrement lisible par ordinateur, sur lequel est enregistré au moins un programme d'ordinateur comprenant des instructions qui conduisent l'unité de traitement 28 à exécuter les étapes du procédé de communication qui va être décrit.

L'unité de traitement 28 comporte ici un driver Wi-Fi 37, qui implémente le protocole Wi-Fi, y compris certaines fonctionnalités facultatives 42, telles que le BSS Transition (souvent appelé *steering*) selon le standard IEEE 802.11vou le *roaming* interne. L'unité de traitement 28 comporte aussi un ensemble de modules logiciels gérant l'utilisation du driver Wi-Fi 37 par les logiciels de l'unité de traitement 28, appelé ici « stack Wi-Fi » 39, et un sous-ensemble, au sein du système d'exploitation du boîtier décodeur 20, implémentant la communication IP et TCP avec d'autres appareils, appelé ici « stack réseau » 43.

L'unité de traitement 28 comprend de plus un ensemble de modules logiciels et matériels qui gère le traitement des flux audio, appelé ici « stack audio » 40.

L'unité de traitement 28 comporte en outre un module de traitement 41, qui est ici un module purement logiciel.

La station 30 et le point d'accès secondaire 31 de l'interface de communication radio 27 utilisent, comme on l'a vu, le même canal de communication. La station 30 et le point d'accès secondaire 31 partagent l'interface de communication radio 27 et donc la couche physique. Une seule fréquence peut être utilisée à la fois pour ces deux modules 30, 31.

On note que l'interface de communication radio 27 peut être une interface monobande, mais aussi être une interface double bande (ou plus généralement multi bande), dans laquelle la station 30 et le point d'accès secondaire 31 ont tous deux une activité sur au moins une bande de fréquences commune. Par exemple, la station 30 peut utiliser une première bande de fréquences pour communiquer dans le premier réseau sans-fil 32 (par exemple proche des 2GHz), alors que le point d'accès secondaire 31 utilise une deuxième bande de fréquences pour communiquer dans le deuxième réseau sans-fil 33 (par exemple proche des 5GHz). Dans ce cas, bien que chaque module communique principalement sur une bande différente, la station 30 peut malgré tout accéder à la deuxième bande de fréquences (pour des scans par exemple) et perturber les communications du point d'accès secondaire 31. On considère dans un tel cas que le canal de communication commun comprend la deuxième bande de fréquences.

Le module de traitement 41 va déterminer, à un instant t, si le point d'accès 31 va transmettre dans un délai prédéterminé suivant l'instant t un flux audio Fa aux enceintes 22, via le canal de communication, pour que celles-ci restituent ledit flux audio Fa et, si c'est le cas, va mettre en œuvre au moins une action limitative permettant de limiter une occupation du canal de communication par la station 30.

Le flux audio Fa dont il est question est donc un flux « destiné à être restitué ». Si le point d'accès 31 transmet des données au format audio aux enceintes 22, qui contiennent du silence, c'est-à-dire des données audio associées à un signal sonore nul, le module de traitement 41 considère qu'aucun flux audio n'est envoyé aux enceintes 22 pour être restitué par les enceintes 22, et donc qu'il n'est pas nécessaire de mettre en œuvre une action limitative.

Le délai prédéterminé suivant l'instant t est par exemple une tranche de temps (*timeslot*) de durée prédéfinie. Le module de traitement 41 détecte ici que le point d'accès secondaire 31 ne va pas transmettre de flux audio aux enceintes 22 dans la tranche de temps suivant l'instant t lorsque le point d'accès secondaire 31 n'a pas transmis de flux audio aux enceintes 22 pendant un nombre prédéterminé de tranches de temps précédant l'instant t.

Lorsque les enceintes 22 connectées au point d'accès secondaire 31 du boîtier décodeur 20 émettent du son et qu'il est prévu qu'elles continueront à le faire dans le futur proche, l'unité de traitement 28 fait donc en sorte que le boîtier décodeur 20 restreint certaines activités Wi-Fi qui pourraient perturber la connexion Wi-Fi avec les enceintes 22. Autrement dit, le module de traitement 41 autorise les activités perturbatrices sur le boîtier décodeur 20, sans limitation, seulement lorsque les enceintes satellites 22 du boîtier décodeur 20 sont silencieuses (c'est-à-dire que les enceintes 22 n'émettent pas de son) et vont demeurer silencieuses pendant le délai prédéterminé. Ainsi, à l'instant t, si les enceintes 22 n'ont pas émis de son pendant plusieurs tranches de temps précédant l'instant t, le module de traitement 41 estime qu'il en sera de même pour la prochaine tranche de temps, si bien que le module de traitement 41 autorise pour cette prochaine tranche de temps la réalisation sans limitation desdites activités perturbatrices.

Dans un premier mode de réalisation, la au moins une action limitative comprend une action consistant, suite à une réception d'une demande de scan émise par une entité du boîtier décodeur 20, à déterminer si le scan associé à ladite demande de scan est ou non nécessaire à une connexion de la station 30 au premier réseau sans-fil 32, et à bloquer ou différer la mise en œuvre du scan uniquement si le scan n'est pas nécessaire à ladite connexion. L'unité de traitement 28 va donc analyser et filtrer certaines demandes de scan. Lorsque les enceintes 22 sont sur le point d'émettre du son, seules les demandes de scan non nécessaires sont bloquées ou différées.

La fonction de scan peut être requise pour réaliser une application de *roaming* (que l'on peut traduire par « itinérance ») : e.g. *roaming* interne, *roaming* selon le standard IEEE 802.11v.

On sait que des demandes de scan utilisant l'interface de communication radio 27 du boîtier décodeur 20, qui est utilisée par la station 30, d'une part, et par le point d'accès secondaire 31 pour les enceintes satellites 22, d'autre part, peuvent être faites pour diverses raisons, sans intervention de l'utilisateur.

Par exemple, la station 30 du boîtier décodeur 20 peut être connectée à plusieurs points d'accès primaires fournis par une ou plusieurs passerelles domestiques Wi-Fi, et peut changer, sans l'intervention de l'utilisateur, de point d'accès afin de passer au meilleur point d'accès disponible au moment donné.

Pour faire ceci, des processus au sein du boîtier décodeur 20, tels que le *roaming* interne, demandent périodiquement des scans, et analysent les résultats afin de déterminer le meilleur point d'accès disponible et de s'y connecter si ce n'est pas déjà le cas. Selon l'état de la connexion de la station 30 du boîtier décodeur 20, ces demandes de scans peuvent être considérées comme superflues. En effet, si la connexion Wi-Fi est déjà de qualité suffisante (c'est-à-dire que l'ensemble des paramètres de la connexion, tels que le RSSI (*Received Signal Strength Indicator*)*,* les modulations négociées, le taux de retransmission des trames, permet des débits et latences suffisants pour répondre à tous les besoins du boîtier décodeur 20 y compris assurer la qualité audio), il n'y a pas d'avantage à gagner d'essayer de se connecter à une autre passerelle pour améliorer la connexion. De plus, un tel scan peut être différé. En effet, si le scan est réalisé et si les résultats sont fournis plus tard, cela n'entrave pas le bon fonctionnement du *roaming* interne.

Ces demandes de scan peuvent aussi avoir pour but de connecter la station 30 à un point d'accès après une perte de connectivité Internet. La réalisation du scan associée à cette demande de scan est alors considérée comme primordiale : le scan est nécessaire pour assurer la bonne réception des flux vidéos du boîtier décodeur 20.

Ces demandes de scan peuvent aussi avoir pour but de mettre en œuvre une géolocalisation, en comparant les points d'accès détectés par le scan avec une base de données de points d'accès à position connue. Une telle demande de scan est considérée comme superflue, car les fonctionnalités principales du boîtier décodeur 20 n'en dépendent pas.

Le module de traitement 41 distingue donc deux types de demande de scan : la demande de scan nécessaire pour la connexion de la station 30 au réseau primaire 32, et la demande de scan non nécessaire à ladite connexion.

Ainsi, lorsque l'unité de traitement 28 reçoit une demande de scan d'une entité du boîtier décodeur 20, le module de traitement 41 détermine si le scan associé à ladite demande de scan est ou non nécessaire à la connexion de la station 30 au réseau primaire 32, et bloque ou diffère la mise en œuvre du scan uniquement si le scan n'est pas nécessaire à ladite connexion.

En effet, la mise en œuvre d'une fonction de scan nécessite de ralentir fortement toute transmission de données sur l'interface de communication radio 27 pendant une durée typiquement égale à environ deux secondes (incluant des coupures totales de l'ordre de 100ms). Le boîtier décodeur 20 ne peut donc pas envoyer de données audio aux enceintes satellites 22, qui devront couper la restitution audio pendant la durée du scan (ou tout du moins restituer l'audio de manière hachée et distordue à cause des pics de latence inévitables).

Les demandes de scan peuvent être envoyées par différentes entités du système d'exploitation du boîtier décodeur 20, et contiennent chacune un identifiant de l'entité envoyant la demande. Il est donc possible de déduire la raison du scan, par exemple en comparant l'identifiant dans la demande à une liste d'identifiants connus pour chaque raison de scan. Le module de traitement 41 détermine donc si la demande de scan est nécessaire ou non en fonction d'un identifiant de ladite entité.

Comme on l'a vu, à l'instant t, le module de traitement 41 met en œuvre l'action limitative, permettant de limiter une occupation du canal de communication par la station 30, seulement si le point d'accès secondaire 31 va transmettre un flux media aux enceintes 22 dans un délai prédéterminé suivant l'instant t.

Avantageusement, le délai prédéterminé a une durée proche mais supérieure (ou égale), à une durée de réalisation du scan.

La durée de réalisation du scan est donc égale à une durée D, et on a :$d \geq D ,$ où d est le délai prédéterminé.

Le délai prédéterminé est donc ici légèrement supérieur à 2s.

Il n'est en effet pas nécessaire de bloquer ou différer la mise en œuvre d'une fonction, même non nécessaire, si le module de traitement 41 détermine qu'aucun son ne sera émis avant la fin de la réalisation de cette fonction.

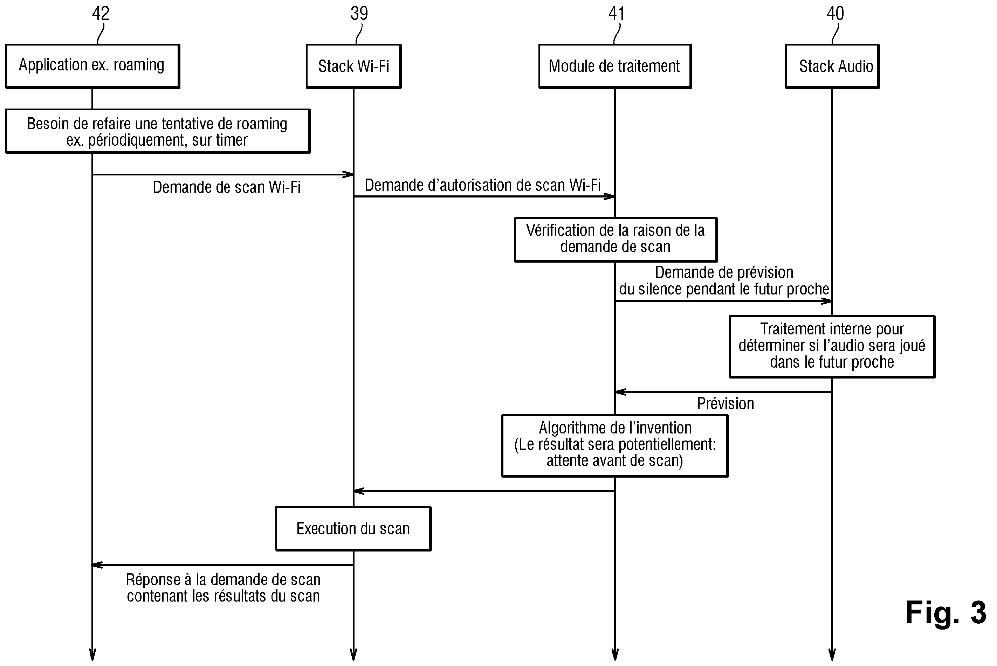

En référence à la figure 3, on décrit de manière plus précise le procédé de communication selon le premier mode de réalisation.

L'action limitative consiste à bloquer ou à différer la mise en œuvre du scan qui résulte d'une demande de scan issue d'une entité interne au boîtier décodeur 20.

La stack Wi-Fi 39 de l'unité de traitement 28 du boîtier décodeur 20 reçoit donc une demande de scan provenant d'un logiciel parmi plusieurs pouvant faire une telle demande, ici en l'occurrence de l'application de *roaming* 44*.*

Le module de traitement 41 reçoit à l'instant t la demande d'autorisation de scan, issue de la stack Wi-Fi 39, et vérifie la raison de la demande du scan.

Puis, le module de traitement 41 interroge la stack audio 40 pour savoir si le point d'accès secondaire 31 va transmettre dans le délai prédéterminé suivant l'instant t un flux audio aux enceintes 22.

La stack audio 40 met en œuvre un traitement interne pour déterminer si de l'audio sera joué dans un futur proche (i.e. même ordre de grandeur que la durée du scan, soit environ 2 secondes).

La stack audio 40 vérifie pour cela si les enceintes 22 ont émis du son sur plusieurs tranches de temps précédentes, et estime qu'il en sera de même pour une prochaine tranche de temps. Alternativement, la stack audio 40 peut détecter que les n prochaines secondes d'audio dans le *buffer* (c'est-à-dire la durée du délai prédéterminé) sont du silence, c'est-à-dire qu'aucun flux audio n'est envoyé aux enceintes 22 pour être restitué.

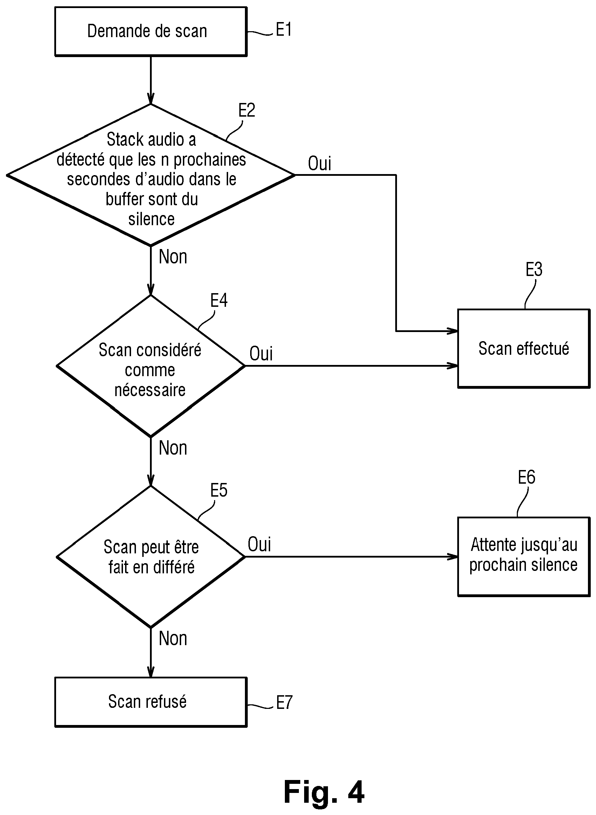

Le module de traitement 41 reçoit alors la prévision de la stack audio 40, et met en œuvre l'algorithme de la figure 4.

Suite à la demande de scan (étape E1), le module de traitement 41 vérifie que la stack audio 40 a bien détecté qu'aucun flux audio n'est sur le point d'être envoyé aux enceintes 22 pour être restitué : étape E2.

Si c'est le cas, un module logiciel, mis en œuvre dans le module de traitement 41, et ci-après appelé « filtre de demandes », indique à la stack Wi-Fi 39 d'exécuter le scan immédiatement : étape E3. Le scan aura donc lieu et sera susceptible de perturber la (potentielle) transmission de données vers les enceintes 22, mais ceci n'entraînera pas de coupure audible car les enceintes 22 n'émettent pas de son à ce moment.

Si ce n'est pas le cas, c'est-à-dire si un flux audio va être restitué dans le délai prédéterminé, le filtre de demandes détermine si le scan associé à la demande de scan est considéré comme nécessaire pour permettre la connexion de la station 30 au réseau 32 : étape E4.

Pour cela, comme on l'a vu, le filtre de demandes étudie par exemple l'identifiant de l'entité source de la demande pour en déduire les raisons du scan. Selon la raison, le filtre de demandes détermine si la demande de scan est nécessaire ou non.

Si le scan est nécessaire, le filtre de demandes donne au stack Wi-Fi 39 l'instruction d'exécuter le scan immédiatement : étape E3.

Si le scan n'est pas nécessaire, le filtre de demandes vérifie si le scan peut être différé (étape E5).

Si c'est le cas, le filtre de demandes indique à la stack Wi-Fi 39 de mettre la demande de scan en attente (étape E6). Le scan sera exécuté lorsque la stack audio 40 aura déterminé que les enceintes 22 n'émettront pas de son dans un futur proche.

Si le scan ne peut pas être différé, le filtre de demandes indique à la stack Wi-Fi 39 de refuser le scan (étape E7).

En revenant à la figure 3, la stack Wi-Fi 39 a donc soit exécuté le scan, soit ne l'a pas exécuté. La stack Wi-Fi 39 transmet donc la réponse à la demande de scan à l'entité à l'origine de la demande, ladite réponse contenant éventuellement les résultats du scan.

Dans cet exemple, où la fonction potentiellement perturbatrice est un scan des canaux Wi-Fi, l'unité de traitement 28 identifie donc la raison de la demande de scan et selon la raison :
- autorise le scan car il est nécessaire ;
- refuse le scan car non nécessaire ; ou
- met la demande en attente, pour être traitée dès que le module de traitement 41 détecte qu'aucun son ne sera émis par les enceintes dans un futur proche (i.e. indication d'un silence reçue de la stack audio 40).

Ainsi, à l'issue de ces étapes, les demandes de scans superflus ne peuvent pas provoquer de coupures audibles de l'audio émis par les enceintes satellites 22.

Dans un deuxième mode de réalisation, ladite au moins une action limitative, mise en œuvre par l'unité de traitement 28 lorsque les enceintes 22 sont sur le point de restituer du son, comprend une action consistant à limiter le débit de la communication mise en œuvre par la station 30.

Le boîtier décodeur 20 est capable de faire des transferts de données importants (typiquement supérieurs à 100Mo), à haut débit (typiquement supérieur à 500Mbps) vers ou depuis l'Internet, à travers la connexion de sa station Wi-Fi 30. Par exemple, le boîtier décodeur 20 peut télécharger des flux vidéos de haute qualité ou des mises à jour logicielles depuis l'Internet, ou télécharger ses traces, rapports de bugs, et statistiques d'utilisation vers l'Internet. Ces transferts de données ne sont pas intrinsèquement bridés, et ils peuvent donc utiliser toute la bande passante mise à disposition par l'interface de communication radio 27. Dans ce cas, il se peut qu'il n'y ait plus de bande passante disponible pour le point d'accès 31 des enceintes satellites 22. De la même manière que pour les scans, ceci peut entraîner des coupures audio des enceintes satellites 22.

Plusieurs implémentations sont envisageables afin de limiter le débit reçu par le boîtier décodeur 20 à travers sa station Wi-Fi 30.

Une implémentation possible est l'utilisation de *qdisc* (queue disciplines, doc: tc), un sous-système de la stack réseau du kernel *Linux* (marque déposée). *Qdisc* permet d'appliquer certaines règles (telles que réduire ou lisser le débit, changer l'ordre de paquets, supprimer un pourcentage des paquets) aux paquets IP identifiés par un filtre (tel qu'un filtre identifiant tous les paquets destinés à être émis par l'interface réseau de la station Wi-Fi 30). *Qdisc* peut être utilisé pour faire de *l'Active Queue Management* (AQM, que l'on peut traduire par « gestion active de file d'attente »), qui dans ce cas consisterait à prétendre n'avoir pas reçu certains paquets, ce qui réduirait le débit du flux si c'est un flux TCP. La gestion de débit de flux TCP réduit systématiquement le débit quand le récepteur n'a pas reçu des paquets qui lui ont été envoyés.

Une autre implémentation possible consisterait à utiliser le champ *Explicit Congestion Notification* (ECN, que l'on peut traduire par « notification explicite de congestion ») des en-têtes IP des paquets. Mettre la valeur 0b11 dans ce champ dans les paquets envoyés par le boîtier décodeur 20 à la passerelle 21 permet d'indiquer à la passerelle 21 de réduire le débit.

En outre, un protocole propriétaire pourrait exister pour communiquer un débit maximum de la transmission de données de la passerelle 21 vers le boîtier décodeur 20. Cependant, cette implémentation nécessiterait une passerelle compatible.

Cette liste d'implémentations n'est pas limitative mais pourra inclure toute autre méthode permettant de limiter le débit des transferts de données entre le boîtier décodeur 20 et la passerelle 21.

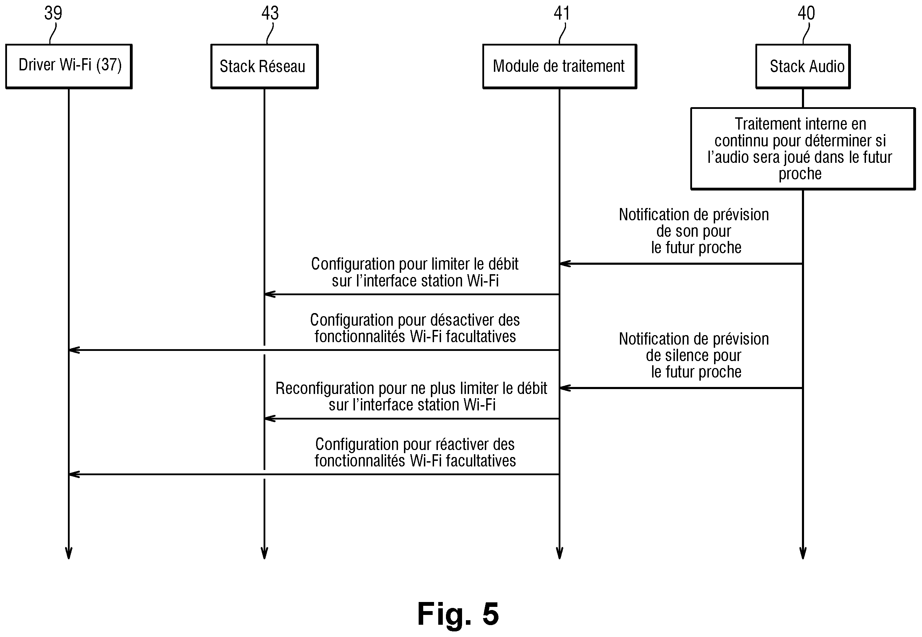

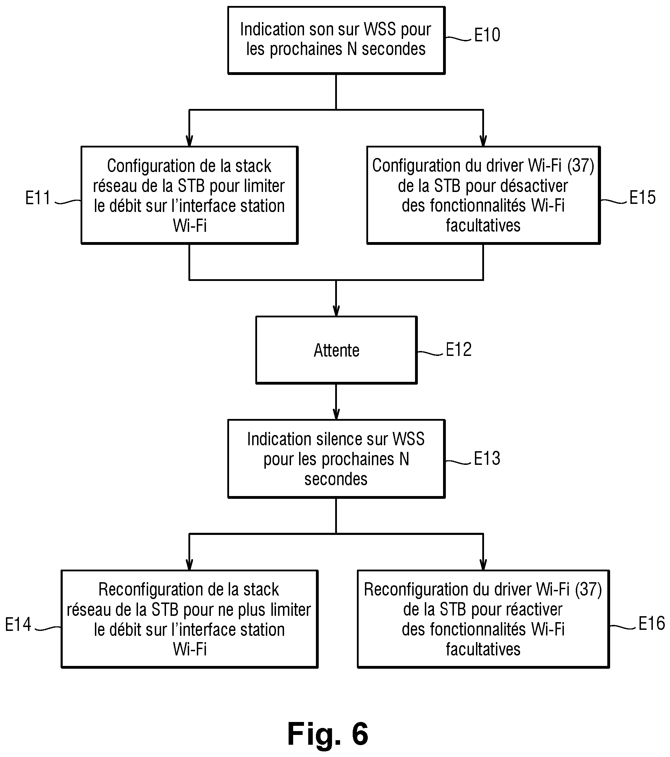

Ainsi, en référence aux figures 5 et 6, à l'instant t, la stack audio 40 met en œuvre un traitement interne pour vérifier si de l'audio sera joué dans un futur proche : étape E10.

Si la stack audio 40 a déterminé que les enceintes 22 émettront du son dans un futur proche, elle notifie un module logiciel, mis en œuvre dans le module de traitement 41 et ci-après nommé « limiteur de débit ». Sur réception de cette notification, le limiteur de débit configure la stack réseau 43 du boîtier décodeur 20 pour limiter le débit de transmissions sur la connexion de la station Wi-Fi 30 : étape E11.

Puis, le module de traitement 41 entre dans une étape d'attente : étape E12.

Cette étape d'attente s'achève lorsque la stack audio 40 détermine que les enceintes 22 n'émettront pas de son dans un futur proche. La stack audio 40 notifie le limiteur de débit : étape E13.

Sur réception de cette notification, le limiteur de débit configure la stack réseau 43 du boîtier décodeur 20 pour défaire la limitation de débit faite pendant l'étape E11 : étape E14.

Ainsi, réciproquement, si la stack audio 40 détecte que les enceintes 22 ne vont pas restituer de son dans un futur proche, la stack audio 40 envoie la notification de prévision de silence pour le futur proche au module de traitement 41. Celui-ci commande une reconfiguration de la stack réseau 43 pour ne plus limiter le débit sur l'interface station Wi-Fi 30.

Dans un troisième mode de réalisation, ladite au moins une action limitative, mise en œuvre par l'unité de traitement 28 lorsque le point d'accès secondaire va transmettre dans le délai prédéterminé un flux audio aux enceintes 22, et donc lorsque les enceintes 22 sont sur le point de restituer du son, comprend une action consistant à bloquer ou différer la mise en œuvre d'au moins une fonction non nécessaire à une connexion de la station 30 au premier réseau sans-fil 32.

On note qu'à nouveau, le délai prédéterminé a une durée proche mais supérieure (ou égale), à une durée de réalisation de la fonction.

En effet, les stacks Wi-Fi implémentent de nombreuses fonctionnalités, dont certaines sont nécessaires pour la communication, tandis que d'autres sont facultatives, n'apportant que des comportements auxiliaires.

Certaines de ces fonctionnalités, telles que le BSS Transition (souvent appelé *steering*) selon le standard IEEE 802.11v et le *Radio Measurements* selon le standard IEEE 802.11k, sont définies dans des normes IEEE 802.11, tandis que d'autres, telles que le *roaming* interne, ne sont pas normalisées mais sont répandues et présentes dans de nombreux produits.

Ces fonctionnalités peuvent consister à faire des scans automatiquement, sans consulter la partie gestion de scans de la stack Wi-Fi, ce qui est le cas du *Radio Measurements* et du *roaming interne.* Ces fonctionnalités peuvent aussi consister à changer automatiquement la configuration de l'interface de communication radio 27 (ce qui nécessite de couper la transmission afin de réinitialiser avec la nouvelle configuration), ce qui est le cas de BSS Transition (i.e. une des fonctions selon IEEE 802.11v).

En ce qui concerne le scan, contrairement au premier mode de réalisation, où l'unité de traitement 28 filtre les demandes de scan avant de les bloquer ou les différer, dans ce troisième mode de réalisation, l'unité de traitement 28 bloque ou diffère directement, sans filtrage, les fonctions de scan facultatives.

Il y a donc des fonctionnalités facultatives qui peuvent à tout moment perturber la transmission de données par le point d'accès 31 du boîtier décodeur 20, et donc provoquer des coupures audio sur les enceintes 22. Cette liste de fonctionnalités n'est pas limitative mais pourra inclure toute autre fonctionnalité Wi-Fi facultative amenant à la coupure spontanée de la transmission de données par les interfaces de communication Wi-Fi.

Afin d'éviter que des fonctionnalités facultatives provoquent des coupures audio des enceintes satellites 22 audibles par l'utilisateur, l'unité de traitement 28 agit sur l'état de ces fonctionnalités.

Ainsi, en référence à nouveau aux figures 5 et 6, la stack audio 40 vérifie donc si les enceintes 22 ont émis du son sur plusieurs tranches de temps précédentes, et estime qu'il en sera de même pour une prochaine tranche de temps : E10.

Si la stack audio 40 a déterminé que les enceintes émettront du son dans un futur proche, elle notifie un module logiciel du module de traitement 41 ci-après nommé le « reconfigurateur de la stack Wi-Fi » : étape E15.

Sur réception de cette notification, le reconfigurateur de la stack Wi-Fi configure le driver Wi-Fi 37 pour bloquer ou différer chacune des fonctionnalités facultatives, dont le *roaming* interne, le BSS Transition, et la *Radio Measurements,* susceptibles de provoquer des coupures de transmission de données par l'interface radio.

Puis, le module de traitement 41 entre dans une étape d'attente : étape E12.

Cette étape d'attente s'achève lorsque la stack audio 40 détermine que les enceintes 22 n'émettront pas de son dans un futur proche. La stack audio 40 notifie le reconfigurateur de la stack Wi-Fi : étape E13.

Sur réception de cette notification, le reconfigurateur configure la stack réseau 43 du boîtier décodeur 20 pour réactiver chacune des fonctionnalités facultatives désactivées pendant l'étape E15 : étape E16.

A l'issue de ces étapes, les fonctionnalités Wi-Fi facultatives ne peuvent pas provoquer de coupures audibles de l'audio émis par les enceintes satellites 22.

On note que l'implémentation de la reconfiguration de la stack Wi-Fi 39 afin de désactiver et réactiver les fonctionnalités dépend de l'implémentation du driver Wi-Fi 37 en elle-même, mais consiste généralement à envoyer au driver Wi-Fi 37 des commandes propriétaires et spécifiques au fournisseur du driver Wi-Fi 37. L'envoi de commandes peut être fait, par exemple, par l'envoi de messages *netlink* ou *ioctl* qui seront ensuite transmis au driver Wi-Fi 37 par le kernel du système d'exploitation du boîtier décodeur 20.

Bien entendu, l'invention n'est pas limitée aux modes de réalisation décrits mais englobe toute variante entrant dans le champ de l'invention tel que défini par les revendications.

L'unité de traitement pourrait mettre en œuvre non pas une, mais plusieurs actions limitatives de manière combinée pour limiter l'occupation du canal de communication par le premier module.

L'architecture de l'unité de traitement, du boîtier décodeur et, plus généralement, du système multimédia, pourrait être différente de celle décrites ici.

La méthode utilisée pour déterminer que les enceintes n'émettront pas de son dans un futur proche pourrait être différente de celles décrites ici.

Les équipements de restitution ne sont pas nécessairement des enceintes.

Le flux média n'est pas nécessairement un flux audio, il pourrait s'agir par exemple d'un flux vidéo.

## Revendications

1. Dispositif de communication (25) comportant :
- une interface de communication radio (27) comprenant un premier module (30) agencé pour utiliser un canal de communication au sein d'un premier réseau sans-fil (32), et un deuxième module (31) agencé pour utiliser ledit canal de communication au sein d'un deuxième réseau sans-fil (33) comprenant au moins un équipement de restitution (22) ;
- une unité de traitement (28) agencée pour déterminer, à un instant t, si le deuxième module (31) va transmettre dans un délai prédéterminé suivant l'instant t un flux média audit au moins un équipement de restitution (22) du deuxième réseau sans-fil (33) via ledit canal de communication pour que ledit au moins un équipement de restitution restitue ledit flux média et, si c'est le cas, pour mettre en œuvre au moins une action limitative permettant de limiter une occupation dudit canal de communication par le premier module (30).

2. Dispositif de communication selon la revendication 1, dans lequel le flux média est un flux audio (Fa).

3. Dispositif de communication selon l'une des revendications précédentes, dans lequel ladite au moins une action limitative comprend une action consistant, suite à une réception d'une demande de scan émise par une entité d'un équipement (20) intégrant le dispositif de communication (25), à déterminer si le scan associé à ladite demande de scan est ou non nécessaire à une connexion du premier module (30) au premier réseau sans-fil (32), et à bloquer ou différer la mise en œuvre du scan uniquement si le scan n'est pas nécessaire à ladite connexion.

4. Dispositif de communication selon la revendication 3, dans lequel l'unité de traitement (28) est agencée pour déterminer si le scan est nécessaire ou non en fonction d'un identifiant de ladite entité.

5. Dispositif de communication selon l'une des revendications précédentes, dans lequel ladite au moins une action limitative comprend une action consistant à bloquer ou à différer la mise en œuvre d'au moins une fonction non nécessaire à une connexion du premier module (30) au premier réseau sans-fil (32).

6. Dispositif de communication selon l'une des revendications 3 à 5, dans lequel le délai prédéterminé a une durée supérieure ou égale à une durée de réalisation dudit scan ou de ladite au moins une fonction.

7. Dispositif de communication selon l'une des revendications précédentes, dans lequel ladite au moins une action limitative comprend une action consistant à limiter un débit d'une communication mise en œuvre par le premier module (30).

8. Dispositif de communication selon l'une des revendications précédentes, dans lequel le délai prédéterminé suivant l'instant t est une tranche de temps de durée prédéfinie, et dans lequel l'unité de traitement (28) détecte que le deuxième module (31) ne va pas transmettre de flux média audit au moins un équipement de restitution (22) dans ladite tranche de temps suivant l'instant t lorsque le deuxième module (31) n'a pas transmis de flux média audit au moins un équipement de restitution (22) pendant un nombre prédéterminé de tranches de temps précédant l'instant t.

9. Dispositif de communication selon l'une des revendications précédentes, dans lequel le premier module (30) est une station Wi-Fi, et le deuxième module (31) est un point d'accès Wi-Fi.

10. Boîtier décodeur (20) intégrant un dispositif de communication (25) selon l'une des revendications précédentes.

11. Procédé de communication, mis en œuvre dans l'unité de traitement (28) d'un dispositif de communication (25) selon l'une des revendications 1 à 9, et comprenant les étapes de déterminer, à un instant t, si le deuxième module (31) va transmettre dans un délai prédéterminé suivant l'instant t un flux média (Fa) audit au moins un équipement de restitution (22) du deuxième réseau sans-fil (33) via le canal de communication pour que ledit au moins un équipement de restitution restitue ledit flux média et, si c'est le cas, de mettre en œuvre au moins une action limitative permettant de limiter une occupation du canal de communication par le premier module (30).

12. Programme d'ordinateur comprenant des instructions qui conduisent le dispositif de communication (25) selon l'une des revendications 1 à 9 à exécuter les étapes du procédé de communication selon la revendication 11.

13. Support d'enregistrement lisible par ordinateur, sur lequel est enregistré le programme d'ordinateur selon la revendication 12.
